# EUROPEAN PATENT APPLICATION

(11) **EP 4 557 787 A1**
(43) Date of publication of application: **21.05.2025**
(21) Application number: 23851569.6
(22) Date of filing: 21.07.2023
(51) Int. Cl.: H04W 8/14

(54) **INFORMATION SENDING METHOD, INFORMATION SUBSCRIPTION METHOD, AND DEVICE**

(30) Priority: 10.08.2022 CN 202210956057
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HAN, Yan, Beijing 100032 (CN); WANG, Dan, Beijing 100032 (CN); LIU, Tangqing, Beijing 100032 (CN); SUN, Tao, Beijing 100032 (CN)
(74) Representative: Murgitroyd & Company
(86) International application number: PCT/CN2023/108569
(87) International publication number: WO 2024/032347

(57) **Abstract**

This application discloses an information sending method, an information subscription method and a device. The method includes: a first network function sends first information to a second network function, the first information including: an identifier of a PDU session served by the first network function and/or a subscriber identifier.

## Description

### CROSS-REFERENCE TO RELATED APPLICATION

This application claims priority to Chinese Patent Application No. 202210956057.3 filed in China on August 10, 2022, a disclosure of which is incorporated herein by reference in its entirety.

### TECHNICAL FIELD

The present disclosure relates to the field of mobile communication technology, and in particular to an information sending method, an information subscription method, and a device.

### BACKGROUND

In the related art, a network function (NF), such as a network data analytics function (NWDAF), can directly subscribe to the information exposure service of a user plane function (UPF), to collect data from the UPF. However, there are still unresolved issues in the related solutions, for example, for the scenario where the NF requests data related to a single user equipment (UE), if the UPF changes in the duration of a protocol data unit (PDU) session, a solution to how the NF gets updated information about the subscribed UPF has not yet been proposed.

### SUMMARY

At least one embodiment of the present disclosure provides an information sending method, an information subscription method and a device, to solve the service exposure subscription problem when the UPF changes during a PDU session in the related art.

In order to solve the above technical problems, this application is implemented as follows.

In a first aspect, an embodiment of the present disclosure provides an information sending method, including:
sending, by a first network function, first information to a second network function, wherein the first information includes: an identifier of a PDU session served by the first network function and/or a subscriber identifier.

Optionally, the first network function sending the first information to the second network function includes:
in a process of registering with the second network function by the first network function, sending, by the first network function, the identifier of the PDU session served by the first network function and/or the subscriber identifier to the second network function.

Optionally, the method further includes:
sending, by the first network function, a first request message for requesting the first information to a third network function, wherein the first request message carries an identifier of the first network function;
receiving, by the first network function, the first information sent by the third network function.

Optionally, the method further includes:
sending, by the first network function, a subscription request for subscribing to an update of the first information to the third network function, wherein the subscription request carries the identifier of the first network function.

Optionally, the method further includes:
receiving, by the first network function, updated first information sent by the third network function, and sending, by the first network function, the updated first information to the second network function.

Optionally, the first network function is a UPF, the second network function is an NRF, and the third network function is an SMF.

In a second aspect, an embodiment of the present disclosure provides an information sending method, including:
receiving, by a second network function, first information sent by at least one first network function, wherein the first information includes: an identifier of a PDU session served by the first network function and/or a subscriber identifier.

Optionally, the method further includes:
receiving, by the second network function, a subscription message sent by a fourth network function for subscribing to information about the first network function, wherein the subscription message carries an identifier of a target PDU session and/or a target subscriber identifier;
sending, by the second network function, a first notification message to the fourth network function, wherein the first notification message carries identification information of a target first network function.

Optionally, the target first network function is: a first network function associated with the identifier of the target PDU session and/or the target subscriber identifier.

Optionally, the method further includes:
maintaining, by the second network function, an association relationship among each of the at least one first network function, the PDU session, and the subscriber identifier according to the first information sent by each of the at least one first network function; and
determining, by the second network function, according to the association relationship, the identification information of the target first network function associated with the identifier of the target PDU session and/or the target subscriber identifier.

Optionally, the method further includes:
in a case that the target first network function is updated, sending, by the second network function, a second notification message to the fourth network function, wherein the second notification message carries identification information of the updated target first network function.

Optionally, the first network function is a UPF, and the second network function is an NRF.

In a third aspect, an embodiment of the present disclosure provides an information subscription method, including:
sending, by a fourth network function, a subscription message for subscribing to information about a first network function to a second network function, wherein the subscription message carries an identifier of a target PDU session and/or a target subscriber identifier;

Optionally, the method further includes:
receiving, by the fourth network function, a first notification message sent by the second network function, wherein the first notification message carries identification information of a target first network function;
subscribing, by the fourth network function, to the target first network function for an information exposure service.

Optionally, the target first network function is: a first network function associated with the identifier of the target PDU session and/or the target subscriber identifier.

Optionally, the method further includes:
receiving, by the fourth network function, a second notification message sent by the second network function, wherein the second notification message carries identification information of an updated first network function.

Optionally, the fourth network function is an NF, and the second network function is an NRF.

In a fourth aspect, an embodiment of the present disclosure provides an information sending method, including:
sending, by a third network function, second information to a fifth network function, wherein the second information includes at least one of: an identifier of a first network function, an identifier of a PDU session served by the first network function, or a subscriber identifier.

Optionally, the third network function sending the second information to the fifth network function includes:
during establishment of the PDU session, sending, by the third network function, the second information to the fifth network function through a sixth network function.

Optionally, the third network function is an SMF, the fifth network function is a BSF, and the sixth network function is a PCF.

In a fifth aspect, an embodiment of the present disclosure provides an information sending method, including:
receiving, by a fifth network function, second information sent by at least one third network function, wherein the second information includes at least one of: an identifier of a first network function, an identifier of a PDU session served by the first network function, or a subscriber identifier.

Optionally, the method further includes:
receiving, by the fifth network function, a subscription message sent by a fourth network function for subscribing to information about the first network function, wherein the subscription message carries an identifier of a target PDU session and/or a target subscriber identifier;
sending, by the fifth network function, a third notification message to the fourth network function, wherein the third notification message carries identification information of a target first network function.

Optionally, the target first network function is: a first network function associated with the identifier of the target PDU session and/or the target subscriber identifier.

Optionally, the method further includes:
maintaining, by the fifth network function, an association relationship among each first network function, the PDU session, and the subscriber identifier according to the second information sent by each of the at least one third network function; and
determining, by the fifth network function, according to the association relationship, identification information of the first network function associated with the identifier of the target PDU session and the target subscriber identifier.

Optionally, the method further includes:
in a case that the target first network function is updated, sending, by the fifth network function, a fourth notification message to the fourth network function, wherein the fourth notification message carries identification information of the updated target first network function.

Optionally, the fifth network function is a BSF, and the third network function is an SMF.

In a sixth aspect, an embodiment of the present disclosure provides an information subscription method, including:
sending, by a fourth network function, a subscription message for subscribing to information about a first network function to a fifth network function, wherein the subscription message carries an identifier of a target PDU session and/or a target subscriber identifier.

Optionally, the method further includes:
receiving, by the fourth network function, a third notification message sent by the fifth network function, wherein the third notification message carries identification information of a target first network function;
subscribing, by the fourth network function, to the target first network function for an information exposure service.

Optionally, the target first network function is: a first network function associated with the identifier of the target PDU session and/or the target subscriber identifier.

Optionally, the method further includes:
receiving, by the fourth network function, a fourth notification message sent by the fifth network function, wherein the fourth notification message carries identification information of an updated target first network function.

Optionally, the fourth network function is an NF, and the fifth network function is a BSF.

In a seventh aspect, an embodiment of the present disclosure provides an information subscription method, including:
subscribing, by a fourth network function, to a source third network function serving a target PDU session for update information of a function related to the target PDU session, wherein the function related to the target PDU session includes a first network function and/or a third network function that serves the target PDU session.

Optionally, the method further includes:
receiving, by the fourth network function, a fifth notification message sent by the source third network function, wherein the fifth notification message is used for indicating update information of a related function serving the target PDU session;
in a case that the fifth notification message indicates the updated first network function, subscribing, by the fourth network function, to the updated first network function for an information exposure service.

Optionally, the subscribing, by the fourth network function, to the source third network function serving the target PDU session for the update information of the function related to the target PDU session includes:
sending, by the fourth network function, a first subscription message for subscribing to the update information of the function related to the target PDU session to the source third network function serving the target PDU session, wherein the first subscription message carries an identifier of a target subscriber.

Optionally, in a case that the fifth notification message indicates the updated first network function, the method further includes:
sending, by the fourth network function, to a first network function prior to the update, a first request message for unsubscribing from an information exposure service.

Optionally, in a case that the fifth notification message indicates that a third network function serving the target PDU session is updated, the method further includes:
determining, by the fourth network function, an updated third network function that serves the target PDU session;
sending, by the fourth network function, to the updated third network function, a second subscription message for subscribing to the update information of the function related to the target PDU session, wherein the second subscription message carries an identifier of a target subscriber.

Optionally, in a case that the fifth notification message indicates that a third network function serving the target PDU session is changed, the method further includes:
sending, by the fourth network function, to a third network function prior to the update, a second request message for unsubscribing from update information of the function related to the target PDU session.

Optionally, the determining, by the fourth network function, the updated third network function that serves the target PDU session includes:
sending, by the fourth network function, a third request message for requesting information of the third network function to a seventh network function, wherein the third request message carries at least one of: a target subscriber identifier, an S-NSSAI, or a DNN; and receiving, by the fourth network function, the information of the third network function found by the seventh network function;
   or,
determining, by the fourth network function, a fifth network function according to an IP address and/or an identifier of a target subscriber, and then determining, by the fourth network function, a sixth network function, and obtaining, by the fourth network function, the information of the third network function from the sixth network function.

Optionally, the first network function is a UPF, the third network function is an SMF, the fourth network function is an NF, the fifth network function is a BSF, the sixth network function is a PCF, and the seventh network function is a UDM.

In an eighth aspect, an embodiment of the present disclosure provides an information sending method, including:
receiving, by a source third network function serving a target PDU session, a subscription message sent by a fourth network function for subscribing to update information of a function related to the target PDU session, wherein the subscription message carries an identifier of a target subscriber, and the function related to the target PDU session includes a first network function and/or a third network function serving the target PDU session.

Optionally, the method further includes:
in a case that the function related to the target PDU session is updated, sending, by the source third network function, a fifth notification message to the fourth network function, wherein the fifth notification message is used for indicating update information of a related function serving the target PDU session.

Optionally, sending, by the source third network function, a fifth notification message to the fourth network function, including:
in a case that the first network function serving the target PDU session is updated, sending, to the fourth network function, the fifth notification message indicating the updated first network function;
   and/or,
in a case that the third network function serving the target PDU session is updated, sending, to the fourth network function, the fifth notification message indicating that the third network function serving the target PDU session is updated.

Optionally, in a case that a third network function serving the target PDU session is updated, the method further includes:
receiving, by the source third network function, a second request message sent by the fourth network function for unsubscribing from the update information of the function related to the target PDU session, and cancelling, by the source third network function, the subscription service provided to the fourth network function.

Optionally, the first network function is a UPF, the third network function is an SMF, and the fourth network function is an NF.

In a ninth aspect, an embodiment of the present disclosure provides a first network function, including a transceiver and a processor, wherein,
the processor is used for sending first information to a second network function through the transceiver, wherein the first information includes: an identifier of a PDU session served by the first network function and/or a subscriber identifier.

In a tenth aspect, an embodiment of the present disclosure provides a second network function, including a transceiver and a processor, wherein,
the processor is used for receiving, through the transceiver, first information sent by at least one first network function, wherein the first information includes: an identifier of a PDU session served by the first network function and/or a subscriber identifier.

In an eleventh aspect, an embodiment of the present disclosure provides a fourth network function, including a transceiver and a processor, wherein,
the processor is used for sending, through the transceiver, a subscription message for subscribing to information about a first network function to a second network function, wherein the subscription message carries an identifier of a target PDU session and a target subscriber identifier.

In a twelfth aspect, an embodiment of the present disclosure provides a third network function, including a transceiver and a processor, wherein,
the processor is used for sending, through the transceiver, second information to a fifth network function, wherein the second information includes at least one of: an identifier of a first network function, an identifier of a PDU session served by the first network function, or a subscriber identifier.

In a thirteenth aspect, an embodiment of the present disclosure provides a fifth network function, including a transceiver and a processor, wherein,
the processor is used for receiving, through the transceiver, second information sent by at least one third network function, wherein the second information includes at least one of: an identifier of a first network function, an identifier of a PDU session served by the first network function, or a subscriber identifier.

In a fourteenth aspect, an embodiment of the present disclosure provides a fourth network function, including a transceiver and a processor, wherein,
the processor is used for sending, through the transceiver, a subscription message for subscribing to information about a first network function to a fifth network function, wherein the subscription message carries an identifier of a target PDU session and/or a target subscriber identifier.

In a fifteenth aspect, an embodiment of the present disclosure provides a fourth network function, including a transceiver and a processor, wherein,
the processor is used for subscribing, through the transceiver, to a source third network function serving a target PDU session for update information of a function related to the target PDU session, wherein the function related to the target PDU session includes a first network function and/or a third network function that serves the target PDU session.

In a sixteenth aspect, an embodiment of the present disclosure provides a third network function, including a transceiver and a processor, wherein,
the processor is used for receiving, through the transceiver, a subscription message sent by a fourth network function for subscribing to update information of a function related to a target PDU session in a case that the third network function is a source third network function serving the target PDU session, wherein the subscription message carries an identifier of a target subscriber, and the function related to the target PDU session includes a first network function and/or a third network function serving the target PDU session.

In a seventeenth aspect, an embodiment of the present disclosure provides a network function, including: a processor, a memory, and a program stored in the memory and executable on the processor, wherein the program, when executed by the processor, implements the steps of any of the methods described above.

In the eighteenth aspect, an embodiment of the present disclosure provides a computer-readable storage medium on which a program is stored. When the program is executed by a processor, the steps of any of the methods described above are implemented.

Compared with the related art, in the information sending method, information subscription method and device provided by the embodiments of the present disclosure, the first network function (e.g., a UPF) send its own PDU session and associated subscriber identifier to the second network function (e.g., registering with an NRF), so that the second network function can obtain the PDU session-related information of the first network function, and other network functions (e.g., an NF) can directly subscribe to the second network function for the information of the first network function of the PDU session, so that the other network functions can timely obtain the new first network function of the PDU session when the first network function of the PDU session changes, and subscribe to the new first network function for the information exposure service of the PDU session, and collect the relevant data of the PDU session.

### BRIEF DESCRIPTION OF THE DRAWINGS

Various other advantages and benefits will become apparent to those of ordinary skill in the art by reading the detailed description of the preferred embodiments below. The accompanying drawings are only for the purpose of illustrating the preferred embodiments and are not to be considered as limiting the present disclosure. Also, the same reference symbols are used throughout the accompanying drawings to represent the same components.
Fig. 1 is a flow chart of an information sending method applied to a first network function according to a first embodiment of the present disclosure;
Fig. 2 is a flow chart of an information sending method applied to a second network function according to the first embodiment of the present disclosure;
Fig. 3 is a flow chart of an information subscription method applied to a fourth network function according to the first embodiment of the present disclosure;
Fig. 4 is an exemplary flow chart of a process for a UPF to perform service-based update on an NRF according to the first embodiment of the present disclosure;
Fig. 5 is an exemplary flow chart of a service exposure subscription process performed by an NWDAF according to the first embodiment of the present disclosure;
Fig. 6 is a flow chart of an information sending method applied to a third network function according to a second embodiment of the present disclosure;
Fig. 7 is a flow chart of an information sending method applied to a fifth network function according to the second embodiment of the present disclosure;
Fig. 8 is a flow chart of an information subscription method applied to a fourth network function according to the second embodiment of the present disclosure;
Fig. 9 is an exemplary flow chart of a process for an SMF to send the second information to a BSF according to the second embodiment of the present disclosure;
Fig. 10 is a flowchart of a process for an NWDAF to perform service exposure subscription through a BSF according to the second embodiment of the present disclosure;
Fig. 11 is a flow chart of an information subscription method applied to the fourth network function according to an third embodiment of the present disclosure;
Fig. 12 is a flow chart of an information sending method applied to the third network function according to the third embodiment of the present disclosure;
Fig. 13 is an exemplary flow chart of an information subscription method according to the third embodiment of the present disclosure;
Fig. 14 is a schematic structural diagram of the first network function according to a fourth embodiment of the present disclosure;
Fig. 15 is a schematic structural diagram of the second network function according to the fourth embodiment of the present disclosure;
Fig. 16 is a schematic structural diagram of the fourth network function according to the fourth embodiment of the present disclosure;
Fig. 17 is another schematic structural diagram of the first network function according to the fourth embodiment of the present disclosure;
Fig. 18 is another schematic structural diagram of the second network function according to the fourth embodiment of the present disclosure;
Fig. 19 is another schematic structural diagram of the fourth network function according to the fourth embodiment of the present disclosure;
Fig. 20 is a schematic structural diagram of the third network function according to a fifth embodiment of the present disclosure;
Fig. 21 is a schematic structural diagram of the fifth network function according to the fifth embodiment of the present disclosure;
Fig. 22 is a schematic structural diagram of the fourth network function according to the fifth embodiment of the present disclosure;
Fig. 23 is another schematic structural diagram of the third network function according to the fifth embodiment of the present disclosure;
Fig. 24 is another schematic structural diagram of the fifth network function according to the fifth embodiment of the present disclosure;
Fig. 25 is another schematic structural diagram of the fourth network function according to the fifth embodiment of the present disclosure;
Fig. 26 is a schematic structural diagram of the fourth network function according to a sixth embodiment of the present disclosure;
Fig. 27 is a schematic structural diagram of the third network function according to the sixth embodiment of the present disclosure;
Fig. 28 is another schematic structural diagram of the fourth network function according to the sixth embodiment of the present disclosure;
Fig. 29 is another schematic structural diagram of the third network function according to the sixth embodiment of the present disclosure.

### DETAILED DESCRIPTION

The exemplary embodiments of the present disclosure will be described in more detail below with reference to the accompanying drawings. Although the exemplary embodiments of the present disclosure are shown in the accompanying drawings, it should be understood that the present disclosure can be implemented in various forms and should not be limited by the embodiments set forth herein. On the contrary, these embodiments are provided in order to enable a more thorough understanding of the present disclosure and to fully convey the scope of the present disclosure to those skilled in the art.

The terms "first", "second", etc. in the specification and claims of the present disclosure are used to distinguish similar objects, and need not be used to describe a specific order or sequential order. It should be understood that the data used in this way can be interchangeable in appropriate circumstances, so that the embodiments of the present disclosure described herein can be implemented for example in a sequence other than those illustrated or described herein. In addition, the terms "including" and "having" and any of their variations are intended to cover non-exclusive inclusions, for example, the process, method, system, product or equipment including a series of steps or units need not be limited to those steps or units clearly listed, but may include other steps or units that are not clearly listed or inherent to these processes, methods, products or equipment. The phrase "and/or" in the specification and claims represents at least one of the connected objects.

The following description provides examples and does not limit the scope, applicability, or configuration set forth in the claims. Changes may be made to the functions and arrangements of the elements discussed without departing from the spirit and scope of the present disclosure. Various examples may appropriately omit, replace, or add various procedures or components. For example, the described methods may be performed in an order different from that described, and various steps may be added, omitted, or combined. In addition, features described with reference to certain examples may be combined in other examples.

### First Embodiment

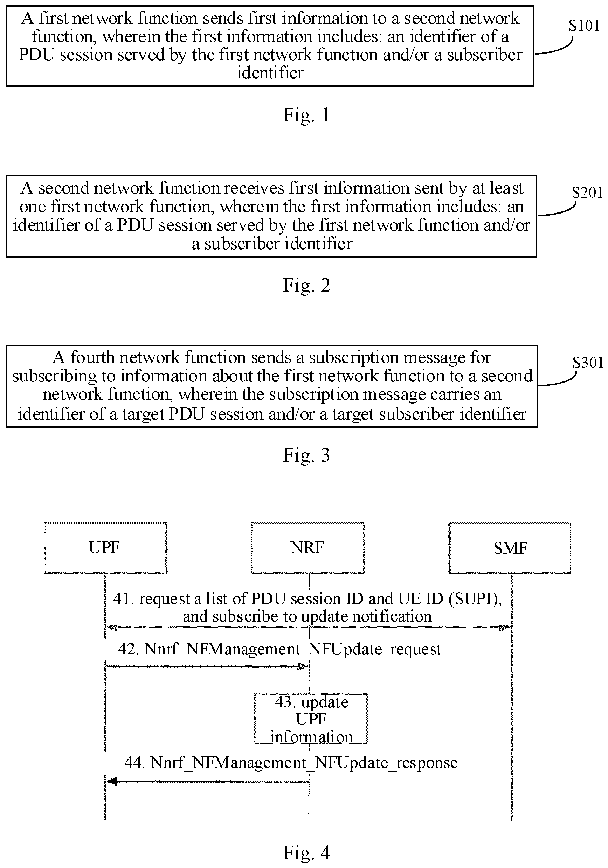

Referring to Fig. 1, an information sending method according to the first embodiment of the present disclosure, when applied to a first network function side, includes:
S101. The first network function sends first information to a second network function, wherein the first information includes: an identifier of a PDU session served by the first network function and/or a subscriber identifier.

Here, the first network function may be a UPF, the second network function may be a network repository function (NRF), and the subscriber identifier may specifically be one or more of a subscription permanent identifier (SUPI), a generic public subscription identifier (GPSI), and a UE identifier (ID). The subscriber identifier included in the first information may specifically be a subscriber identifier associated with a PDU session served by the first network function.

Through the above steps, the first network function (e.g., UPF) according to the embodiment of the present disclosure sends its own PDU session and the subscriber identifier associated with the PDU session to the second network function (e.g., registering with an NRF), so that the second network function can obtain the PDU session related information of the first network function, and other network functions (e.g., an NF) can directly subscribe to the second network function for the information of the first network function of the PDU session, so that the other network functions can timely obtain the new first network function of the PDU session when the first network function of the PDU session changes, and subscribe to the new first network function for the information exposure service of the PDU session, and collect the relevant data of the PDU session.

In the above S101 according to this embodiment, the first network function may send the identifier of the PDU session served by the first network function and/or the subscriber identifier to the second network function during the process of registering with the second network function. The subscriber identifier is the subscriber identifier associated with the PDU session served by the first network function.

In this embodiment, the first network function may also send a first request message for requesting the first information to the third network function, and the first request message carries the identifier of the first network function. The third network function queries and obtains the first information (the identifier of the PDU session of the first network function and/or the subscriber identifier) according to the first request message, and then sends the queried first information to the first network function, so that the first network function can receive the first information sent by the third network function and obtain the first information. Then, the first network function can execute the above S101 and send the first information to the second network function. Here, the third network function may specifically be a session management function (SMF).

The first network function can subscribe to the first information by sending a subscription request for subscribing to updates of the first information to the third network function, wherein the subscription request carries the identifier of the first network function. In this way, when the first information is updated, the third network function can send the updated first information to the first network function in a timely manner. At this time, the first network function receives the updated first information sent by the third network function, and can also send the updated first information to the second network function, thereby updating the first information recorded on the second network function side, and realizing timely updating of the first information on the second network function side.

Referring to Fig. 2, an information sending method according to the first embodiment of the present disclosure, when applied to the second network function side, includes:
S201. The second network function receives first information sent by at least one first network function, wherein the first information includes: an identifier of a PDU session served by the first network function and/or a subscriber identifier.

Here, the first network function may be a UPF, and the second network function may be an NRF. The subscriber identifier may specifically be one or more of SUPI, GPSI, and UE ID. The subscriber identifier included in the first information may specifically be a subscriber identifier associated with a PDU session served by the first network function.

Through the above step, the second network function according to this embodiment can obtain the PDU session of the first network function, the subscriber identifier associated with the PDU session, and the like, so as to provide information related to the first network function to other network functions in the network.

In this embodiment, each first network function sends the identifier of its own PDU session and/or the subscriber identifier associated with the PDU session to the second network function, so that the second network function can maintain the association relationship among each first network function, PDU session and subscriber identifier based on the first information sent by each first network function.

The above method may also include the following steps: receiving, by the second network function, a subscription message sent by a fourth network function for subscribing to information about the first network function, the subscription message carrying an identifier of a target PDU session and/or a target subscriber identifier; sending, by the second network function, a first notification message to the fourth network function, the first notification message carrying the identification information of a target first network function.

Here, the fourth network function is a network function that needs to subscribe to the information exposure service of the target PDU session. Specifically, the fourth network function can be an NF, e.g., a consumer NF, an NWDAF, etc., and can also be an application function (AF), e.g., the AF of a time-sensitive network (TSN), etc., and can also be a time sensitive communication time synchronization function (TSCTSF), etc. When the fourth network function needs to subscribe to the information exposure service of the target PDU session, the fourth network function sends a subscription message to the second network function to subscribe to the information of the first network function for the target PDU session. In this way, after receiving the subscription message, the second network function can determine the identification information of the target first network function according to the association relationship among each first network function, PDU session and subscriber identifier that is maintained by the second network function, and send the identification information to the fourth network function. The target first network function is a first network function associated with the identifier of the target PDU session and/or the target subscriber identifier.

Through the above steps, this embodiment enables the second network function to provide the fourth network function with the identification information of the target first network function associated with the identifier of the target PDU session and the target subscriber identifier, so that the fourth network function can obtain the identification information of the target first network function, thereby subscribing to the target first network function for an information exposure service.

In addition, in this embodiment, when the target first network function is updated, the second network function may also send a second notification message to the fourth network function, wherein the second notification message carries the identification information of the updated target first network function, to achieve timely update of information about the first network function.

Referring to Fig. 3, an information subscription method according to the first embodiment of the present disclosure, when applied to the fourth network function side, includes:
S301, The fourth network function sends a subscription message for subscribing to information about the first network function to the second network function, wherein the subscription message carries an identifier of a target PDU session and/or a target subscriber identifier.

Here, the fourth network function can be an NF, e.g., consumer NF, NWDAF, etc., and can also be an AF, e.g., TSN AF, etc., and can also be a TSCTSF, etc. The second network function can be an NRF. The subscriber identifier can specifically be one or more of SUPI, GPSI and UE ID. The second network function maintains an association relationship among at least one first network function, a PDU session, and a subscriber identifier, so that the identification information of the target first network function associated with the identifier of the target PDU session and the target subscriber identifier can be determined according to the subscription message sent by the fourth network function, and returned to the fourth network function.

Through the above step, the fourth network function can subscribe to the second network function for the information about the first network function associated with the identifier of the target PDU session and/or the target subscriber identifier, thereby obtaining information about the first network function.

The above method may further include the following steps:
receiving, by the fourth network function, a first notification message sent by the second network function, wherein the first notification message carries identification information of a target first network function; and subscribing, by the fourth network function, to the target first network function for an information exposure service.

Here, the target first network function may specifically be: a first network function associated with the identifier of the target PDU session and/or the target subscriber identifier.

Through the above steps, the fourth network function according to this embodiment can send a subscription request to the second network function, subscribe to the identification information of the target first network function associated with the target PDU session and the target subscriber identifier, and then initiate a subscription to the target first network function for the information exposure service.

In this embodiment, when the target first network function is updated, the second network function will send a second notification message to the fourth network function. At this time, the fourth network function receives the second notification message sent by the second network function, and the second notification message carries identification information of an updated first network function associated with the identifier of the target PDU session and the target subscriber identifier, thereby timely updating the information of the first network function. In this way, the second network function can subscribe to the updated first network function for the information exposure service of the target PDU session.

The following provides a specific example of the first embodiment, taking the first network function being a UPF, the second network being an NRF, the third network function being an SMF, and the fourth network function being an NWDAF as an example.

In the process for the UPF to perform service-based update on the NRF as shown in Fig. 4, information about the PDU session processed by the UPF and SUPI (obtained from SMF) are added in the UPF's registration process with the NRF. In this way, the NWDAF can directly subscribe to the NRF for UPF information. The process shown in Fig. 4 includes steps 41 to 44.

Step 41. A UPF sends a request message to an SMF through an SMF event exposure service or an N4 interface, to request a list of UE ID (SUPI) and PDU session ID of the PDU session processed by the UPF, and subscribe to an update notification. The request message carries a UPF ID. The SMF responds to the UPF with the list, and notifies UPF when the list is updated.

Step 42. The UPF sends an Nnrf_NFManagement_NFUpdate_request message to the NRF, the message carrying the list of SUPI and PDU session ID.

Step 43. The NRF updates UPF related information.

Step 44. The NRF sends an Nnrf_NFManagement_NFUpdateresponse message to the UPF, notifying the UPF that the information update is successful.

Through the above process, the identifier of the PDU session of the UPF and the subscriber identifier associated with the PDU session are sent to the NRF, so that the NRF can maintain information such as the identifier of the PDU session of the UPF and the subscriber identifier associated with the PDU session.

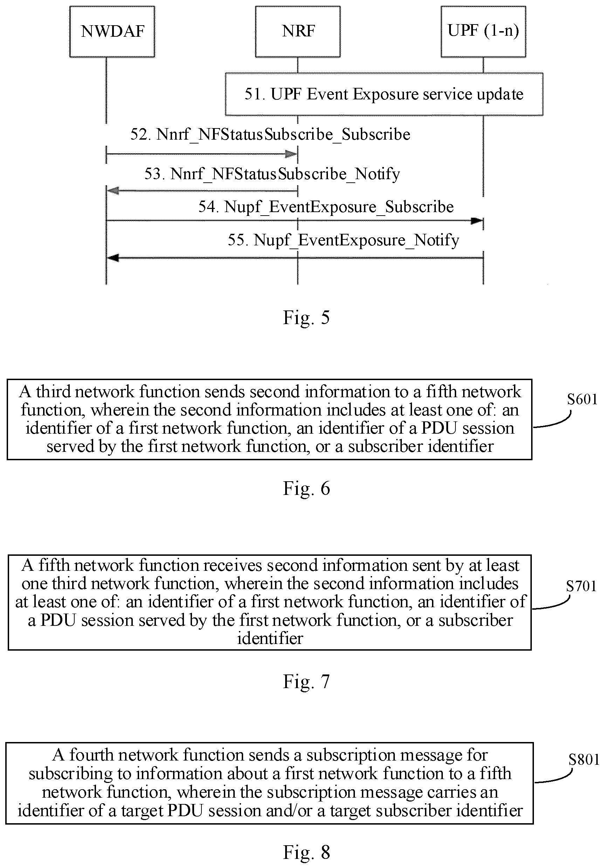

As shown in Fig. 5, a service exposure subscription process performed by the NWDAF through the NRF includes steps 51 to 55.

Step 51. The UPF sends an Nnrf_NFManagement_NFUpdate_request message to the NRF, the message carrying a list of SUPI and PDU session ID.

Step 52. The NWDAF subscribes to the NRF for UPF ID through an Nnrf_NFStatusSubscribe_Subscribe service carrying a list of SUPI and PDU session ID.

Step 53. The NRF informs the NWDAF of the requested UPF ID list through an Nnrf_NF StatusSubscribe _Notify service, and notify the NWDAF to update the UPF ID list when UPF information changes.

Step 54. The NWDAF subscribes, based on the UPF ID list fed back by the NRF, to the corresponding UPF for an information exposure service.

Step 55. The UPF exposes the requested information to the NWDAF.

Through the above steps, the NWDAF can request UPF information of a related PDU session from the NRF, and then subscribe to the corresponding UPF for an information exposure service.

### Second Embodiment

Referring to Fig. 6, an information sending method according to the second embodiment of the present disclosure, when applied to a third network function side, includes:
S601. The third network function sends second information to a fifth network function, wherein the second information includes at least one of: an identifier of a first network function, an identifier of a PDU session served by the first network function, or a subscriber identifier.

Here, the third network function may be an SMF, and the fifth network function may be a binding support function (BSF). The subscriber identifier may specifically be one or more of SUPI, GPSI and UE ID. The subscriber identifier included in the second information may specifically be a subscriber identifier associated with the PDU session served by the first network function.

Through the above step, this embodiment sends the second information through the third network function, and provides the information such as one or more of the identifier of the first network function, the PDU session and the subscriber identifier to the fifth network function. In this way, the fifth network function can maintain the association relationship among each first network function, PDU session and subscriber identifier, and provide the information to the related network function when necessary.

In this embodiment, the third network function may send the second information to the fifth network function through a sixth network function during the establishment of the PDU session. The sixth network function may specifically be a policy control function (PCF).

Referring to Fig. 7, an information sending method according to the second embodiment of the present disclosure, when applied to a fifth network function side, includes:
S701, The fifth network function receives second information sent by at least one third network function, wherein the second information includes at least one of: an identifier of a first network function, an identifier of a PDU session served by the first network function, or a subscriber identifier.

Here, the fifth network function may be a BSF, and the third network function may be an SMF. The subscriber identifier included in the second information may specifically be a subscriber identifier associated with a PDU session served by the first network function.

Through the above step, the fifth network function in the embodiment can obtain the information related to the first network function, and thus can provide the information related to the first network function to other network functions.

The above method may further include the following steps:
receiving, by the fifth network function, a subscription message sent by a fourth network function for subscribing to information about the first network function, wherein the subscription message carries an identifier of a target PDU session and/or a target subscriber identifier; and sending, by the fifth network function, a third notification message to the fourth network function, wherein the third notification message carries identification information of the target first network function.

Here, the fourth network function may be an NF, e.g., a consumer NF, an NWDAF, etc., and may also be an AF, e.g., a TSN AF, etc., and may also be a TSCTSF, etc. The target first network function may specifically be a first network function associated with the target subscriber identifier.

Through the above steps, in this embodiment, the fifth network function is responsible for obtaining information about each first network function, PDU session and subscriber identifier, and providing the fourth network function with the identifier information of the target first network function, so that the fourth network function can subscribe to the target first network function for an information exposure service.

In this embodiment, the fifth network function can maintain the association relationship among each first network function, PDU session and subscriber identifier according to the second information sent by each of the at least one third network function. In this way, in the above steps, the fifth network function can determine the target first network function according to the association relationship, for example, the identification information of the first network function associated with the identifier of the target PDU session and the target subscriber identifier.

Considering that the first network function for the target PDU session may be updated, in order to enable the fourth network function to be informed of the update in a timely manner, in this embodiment, when the target first network function is updated, the fifth network function sends a fourth notification message to the fourth network function, and the fourth notification message carries the identification information of the updated target first network function. The updated target first network function is an updated first network function associated with the identification of the target PDU session and/or the target subscriber identifier.

Referring to Fig. 8, an information subscription method according to the second embodiment of the present disclosure, when applied to a fourth network function side, includes:
S801: The fourth network function sends a subscription message for subscribing to information about a first network function to a fifth network function, wherein the subscription message carries an identifier of a target PDU session and/or a target subscriber identifier.

Here, the fourth network function may be an NF, e.g., a consumer NF, an NWDAF, etc., and may also be an AF, e.g., a TSN AF, etc., and may also be a TSCTSF, etc. The fifth network function may be a binding support function (BSF). The subscriber identifier may be one or more of SUPI, GPSI and UE ID.

Through the above steps, the fourth network function can subscribe to the fifth network function for the desired information about the first network function, and then can subscribe to the first network function for the information exposure service.

The method may further include the following steps: the fourth network function receives a third notification message sent by the fifth network function, the third notification message carrying identification information of a target first network function; the fourth network function subscribes to the target first network function for the information exposure service.

Here, the target first network function may specifically be a first network function associated with the identifier of the target PDU session and/or the target subscriber identifier.

Through the above steps, the fourth network function can obtain, from the fifth network function, the identification information of the target first network function associated with the identifier of the target PDU session and the target subscriber identifier, and then subscribe to the target first network function for the information exposure service.

In this embodiment, the fourth network function may also receive a fourth notification message sent by the fifth network function, wherein the fourth notification message carries the identification information of the updated target first network function. The updated target first network function is an updated first network function associated with the identifier of the target PDU session and/or the target subscriber identifier.

The following provides a specific example of the second embodiment by taking the third network function being an SMF, the fourth network function being an NWDAF, the fifth network function being a BSF, and the sixth network function being a PCF as an example.

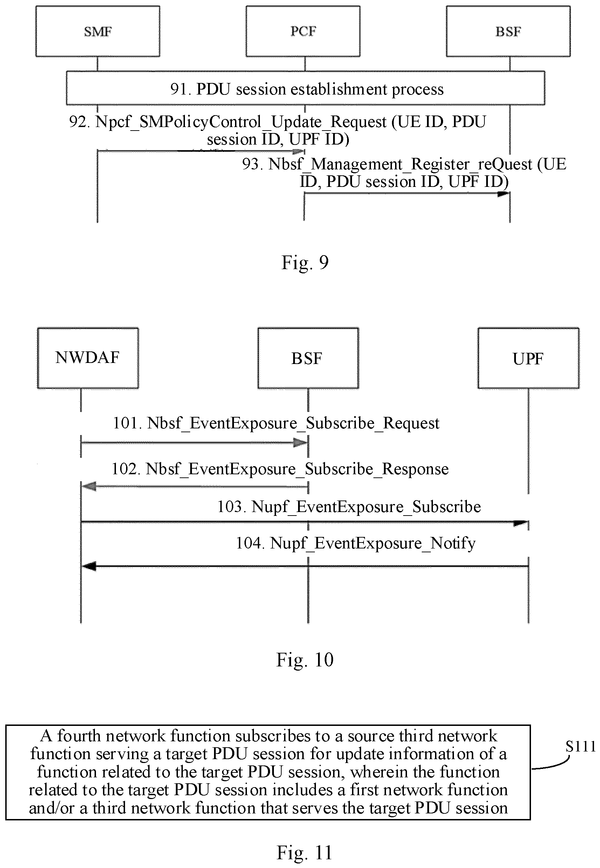

As shown in Fig. 9, a process for the SMF to send the second information to the BSF includes steps 91 to 93.

Step 91. An SMF establishes a PDU session for a relevant subscriber.

Steps 92-93. during establishment of the PDU session, the SMF sends the second information to the BSF through the PCF.

As shown in Fig. 10, the NWDAF performs a service exposure subscription process through the BSF, and the process includes steps 101 to 104.

Step 101. The NWDAF subscribes to the BSF for UPF ID through an Nbrf_EventExposure_Subscribe_Request service which carries a list of SUPI and PDU session ID.

Step 102. The BSF informs the NWDAF of the requested UPF ID list through an Nbrf_EventExposure_Subscribe _Response service, and notify the NWDAF to update the UPF ID list when the UPF information changes.

Step 103. The NWDAF subscribes, based on the UPF ID list fed back by the BSF, to the corresponding UPF for an information exposure service.

Step 104. The UPF exposes the request information to the NWDAF.

Through the above steps, the NWDAF can request, from the BSF, information about the UPF for the related PDU session, and then subscribes to the corresponding UPF for an information exposure service.

### Third Embodiment

Referring to Fig. 11, an information subscription method according to the third embodiment of the present disclosure, when applied to a fourth network function side, includes:
S111, The fourth network function subscribes to a source third network function serving a target PDU session for update information of a function related to the target PDU session, wherein the function related to the target PDU session includes a first network function and/or a third network function that serves the target PDU session.

Here, the fourth network function may be an NF, e.g., a consumer NF, an NWDAF, etc., and may also be an AF, e.g., a TSN AF, etc., and may also be a TSCTSF, etc. The third network function may specifically be an SMF. The first network function may be a UPF. The fourth network function may send to the source third network function serving the target PDU session a first subscription message for subscribing to the update information of the function related to the target PDU session, wherein the first subscription message carries an identifier of a target subscriber, so as to subscribe to the update information of the related function.

Through the above step, the fourth network function can subscribe to the third network function for the relevant information of the specific first network function and/or the third network function, and then subscribe to the specific first network function for an information exposure service.

The method according to this embodiment may further include the following steps: the fourth network function receives a fifth notification message sent by the source third network function, wherein the fifth notification message is used for indicating update information of the related function serving the target PDU session; in a case that the fifth notification message indicates the updated first network function, the fourth network function subscribes to the updated first network function for an information exposure service.

Through the above steps, the fourth network function according to this embodiment can subscribe to the third network function for the related information of the first network function or the third network function that serves the target PDU session. In this way, when the first network function serving the target PDU session is updated, the fourth network function can be informed of the update in a timely manner and subscribe to the updated first network function for an information exposure service.

In this embodiment, in a case that the fifth notification message indicates the updated first network function, the fourth network function may also send, to a first network function prior to the update, a first request message for unsubscribing from the information exposure service, that is, to unsubscribe from the information exposure service.

In this embodiment, when the fifth notification message indicates that the third network function serving the target PDU session is updated, the fourth network function can determine the updated third network function serving the target PDU session; then, the fourth network function can send a second subscription message for subscribing to update information of a function related to the target PDU session to the updated third network function, wherein the second subscription message carries an identifier of a target subscriber. In addition, the fourth network function can also send, to a third network function prior to the update, a second request message for unsubscribing from update information of the function related to the target PDU session, that is, to unsubscribe from the update information.

In this embodiment, the fourth network function may determine, in any of the following ways, the updated third network function serving the target PDU session.
1) The fourth network function sends a third request message for requesting information about the third network function to a seventh network function, the third request message carrying at least one of: a target subscriber identifier, single network slice selection assistance information (S-NSSAI) or a data network name (DNN); the fourth network function receives the information about the third network function found by the seventh network function. Here, the seventh network function may be a unified data management (UDM). The information about the third network function found by the seventh network function is a third network function that matches the target subscriber identifier, S-NSSAI and DNN.
2) The fourth network function determines the fifth network function according to an IP address and/or the target subscriber identifier, further determines a sixth network function according to the fifth network function, and obtains the information about the third network function from the sixth network function. Here, the fifth network function may be a BSF.

Here, the fourth network function determines the fifth network function associated with the target subscriber identifier based on the IP address and/or the target subscriber identifier, and then determines the sixth network function associated with the fifth network function, and then obtains, from the sixth network function, information about the third network function matching the target subscriber identifier, S-NSSAI and DNN.

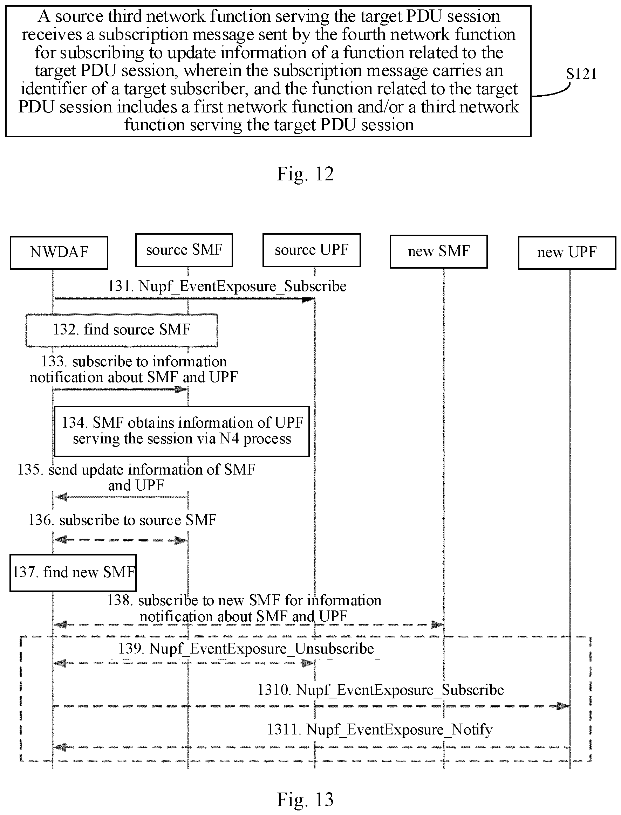

Referring to Fig. 12, an information sending method according to the third embodiment of the present disclosure, when applied to a third network function side, includes:
S121, A source third network function serving the target PDU session receives a subscription message sent by the fourth network function for subscribing to update information of a function related to the target PDU session, wherein the subscription message carries an identifier of a target subscriber, and the function related to the target PDU session includes a first network function and/or a third network function serving the target PDU session.

Here, the fourth network function may be an NF, e.g., a consumer NF, an NWDAF, etc., and may also be an AF, e.g., a TSN AF, etc., and may also be a TSCTSF, etc. The third network function may specifically be an SMF. The first network function may be a UPF.

Through the above step, the third network function may provide the fourth network function with relevant information of the specific first network function and/or third network function, thereby enabling the fourth network function to subscribe to the specific first network function for an information exposure service.

The method according to this embodiment may further include the following steps: when the function related to the target PDU session is updated, sending, by the source third network function, a fifth notification message to the fourth network function, wherein the fifth notification message is used for indicating the update information of the relevant function serving the target PDU session.

Through the above steps, the third network function can provide, to the fourth network function, the update information of the first network function and/or the third network function serving the target PDU session, so that the fourth network function can be informed of the update in a timely manner and subscribe to the updated first network function for an information exposure service.

In the above steps, the sending, by the source third network function, the fifth notification message to the fourth network function may specifically include one or more of the following:
1) when the first network function serving the target PDU session is updated, sending, to the fourth network function, a fifth notification message indicating the updated first network function;
2) when the third network function serving the target PDU session is updated, sending, to the fourth network function, the fifth notification message indicating that the third network function serving the target PDU session is updated.

In addition, in this embodiment, when the third network function serving the target PDU session is updated, the source third network function receives a second request message sent by the fourth network function for unsubscribing from update information of the function related to the target PDU session, and cancels the subscription service provided to the fourth network function.

The following provides a specific example of the third embodiment by taking the third network function being an SMF, the fourth network function being an NWDAF, and the first network function being a UPF as an example.

In this example, the NWDAF first subscribes to the SMF for information of the SMF and UPF. If the SMF or UPF changes during the session, the SMF notifies the NWDAF to subscribe to a new SMF/UPF. As shown in Fig. 13, this example specifically includes steps 131 to 1311.

Step 131. The NWDAF subscribes to a source UPF for an information exposure service.

Step 132. The NWDAF obtains an SMF ID from a UDM by using an Nudm_UECM_Get request, which carries a UE ID (SUPI), S-NSSAI, and DNN.

Step 133. The NWDAF subscribes to the source SMF for the information change notification related to the SMF and UPF for the UE session through an SMF Event Exposure service, which carries an SUPI.

Step 134. The SMF obtains the update information of the UPF serving the UE session through an N4 interface. Usually, the change of UPF is initiated voluntarily by SMF. If the UPF senses that a change is needed, the UPF will report it to the SMF through an N4 Session Report, and the SMF will apply the change to the corresponding session. Therefore, the SMF can obtain the real-time association relationship between a PDU session and a UPF.

Step 135. The SMF notifies the NWDAF of the UPF update information through an SMF Event Exposure service, which carrying the new UPF ID. If the SMF serving the session also changes, the SMF notifies the NWDAF to unsubscribe from the SMF.

Step 136. If the SMF changes, the NWDAF unsubscribes from the source SMF to cancel the original subscription.

Step 137. The NWDAF uses UE ID to find a new SMF serving the session. (1) The NWDAF can obtain the SMF ID from a UDM by using an Nudm_UECM_Get request, which carrying a UE ID (SUPI), S-NSSAI, and DNN, and then, use the carried parameters to locate an SMF. (2) The NWDAF can use the UE ID (SUPI) and an IP address to locate a BSF, and then obtain all PCFs associated with the BSF from the BSF by using Nbsf_EventExposure_Subscribe, and obtain SMF IDs from all PCFs.

Step 138. The NWDAF subscribes, by using SUPI, to the new SMF for the information change notification related to the SMF and UPF for the UE session.

Step 139. If the UPF changes, the NWDAF unsubscribes from the source UPF to cancel the original subscription.

Step 1310. The NWDAF subscribes to the new UPF.

Step 1311. The new UPF exposes the requested information to the NWDAF.

The above describes various methods of the first embodiment of the present disclosure. The following further provides apparatuses for implementing the above methods.

### Fourth Embodiment

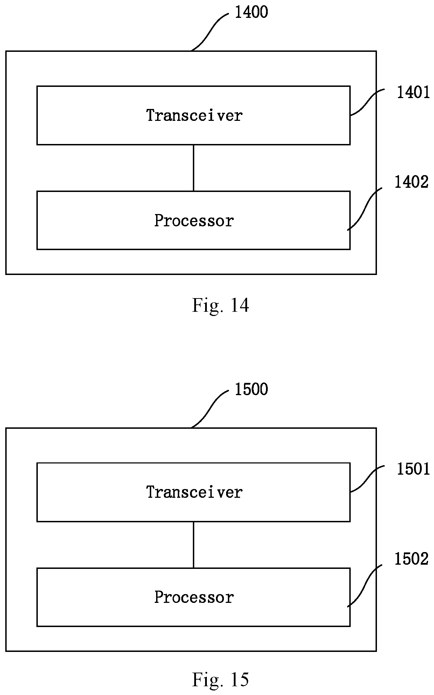

Please referring to Fig. 14, an embodiment of the present disclosure further provides a first network function 1400, including: a transceiver 1401 and a processor 1402.

The processor 1402 is used for sending first information to a second network function through the transceiver 1401, wherein the first information includes: an identifier of a PDU session served by the first network function and/or a subscriber identifier.

Here, the first network function may be a UPF, the second network function may be an NRF, and the subscriber identifier may specifically be one or more of SUPI, GPSI, and UE ID. The subscriber identifier included in the first information may specifically be a subscriber identifier associated with a PDU session served by the first network function.

Through the above, the first network function sends its own PDU session and associated subscriber identifier to the second network function (e.g., registering with an NRF), so that the second network function can obtain the PDU session related information of the first network function. Other network functions (such as NF) can directly subscribe to the second network function for the information of the first network function for the PDU session, so that the other network functions can timely obtain the new first network function of the PDU session when the first network function of the PDU session changes, and subscribe to the new first network function for the information exposure service of the PDU session, and collect the relevant data of the PDU session.

Optionally, the processor is further used for sending an identifier of the PDU session served by the first network function and/or a subscriber identifier to the second network function during registration with the second network function. The subscriber identifier is a subscriber identifier associated with the PDU session served by the first network function.

Optionally, the processor is further used for sending a first request message for requesting the first information to a third network function, wherein the first request message carries an identifier of the first network function; and receiving the first information sent by the third network function.

Optionally, the processor is further used for sending a subscription request for subscribing to an update of the first information to the third network function, wherein the subscription request carries the identifier of the first network function.

Optionally, the processor is further used for receiving updated first information sent by the third network function, and sending the updated first information to the second network function.

Optionally, the first network function is a UPF, the second network function is an NRF, and the third network function is an SMF.

It should be noted that the device in this embodiment is a device corresponding to the method applied to the first network function in the first embodiment, and the implementation methods in the above-mentioned embodiments are all applicable to the embodiments of the device, and can also achieve the same technical effects. The device provided in the embodiment of the present disclosure can implement all the method steps implemented in the method embodiments, and can achieve the same technical effects, and the parts and beneficial effects of this embodiment that are the same as those in the method embodiment will not be specifically repeated here.

Please referring to Fig. 15, an embodiment of the present disclosure further provides a second network function 1500, including a transceiver 1501 and a processor 1502.

The processor 1502 is used for receiving, through the transceiver 1501, first information sent by at least one first network function, wherein the first information includes: an identifier of a PDU session served by the first network function and/or a subscriber identifier.

Here, the subscriber identifier included in the first information may specifically be a subscriber identifier associated with the PDU session served by the first network function.

Optionally, the processor is also used for receiving a subscription message sent by a fourth network function for subscribing to information about the first network function, the subscription message carrying an identifier of a target PDU session and/or a target subscriber identifier; and sending a first notification message to the fourth network function, the first notification message carrying identification information of the target first network function.

Here, the target first network function may be: a first network function associated with the identifier of the target PDU session and/or the target subscriber identifier.

Optionally, the processor is also used for maintaining the association relationship among each first network function, PDU session and subscriber identifier based on the first information sent by each first network function; and determining, based on the association relationship, the identification information of the target first network function associated with the identifier of the target PDU session and/or the target subscriber identifier.

Optionally, the processor is further used for sending a second notification message to the fourth network function when the target first network function is updated, wherein the second notification message carries identification information of the updated target first network function.

Optionally, the first network function is a UPF, and the second network function is an NRF.

It should be noted that the device in this embodiment is a device corresponding to the method applied to the second network function in the first embodiment, and the implementation methods in the embodiments are applicable to the embodiments of the device, and can achieve the same technical effect. The device provided in the embodiment of the present disclosure can implement all the method steps implemented in the above method embodiments, and can achieve the same technical effect, and the parts and beneficial effects of this embodiment that are the same as those in the method embodiments will not be specifically described here.

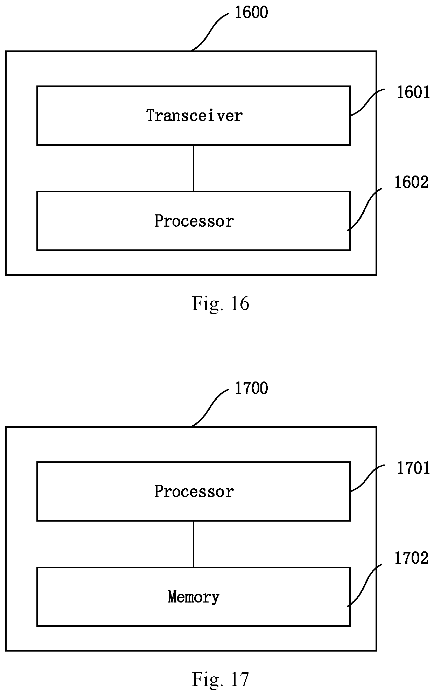

Please referring to Fig. 16, an embodiment of the present disclosure further provides a fourth network function 1600, including a transceiver 1601 and a processor 1602.

The processor 1602 is used for sending a subscription message for subscribing to information about the first network function to the second network function through the transceiver 1601, wherein the subscription message carries an identifier of a target PDU session and/or a target subscriber identifier.

Optionally, the processor is further used for receiving a first notification message sent by the second network function, wherein the first notification message carries identification information of a target first network function; and subscribing to the target first network function for an information exposure service.

Here, the target first network function may be: a first network function associated with the identifier of the target PDU session and/or the target subscriber identifier.

Optionally, the processor is further used for receiving a second notification message sent by a second network function, wherein the second notification message carries identification information of an updated first network function associated with the identifier of the target PDU session and the target subscriber identifier.

Optionally, the fourth network function is an NF, and the second network function is an NRF.

It should be noted that the device in this embodiment is a device corresponding to the method applied to the fourth network function in the first embodiment, and the implementation methods in the above embodiments are applicable to the embodiments of the device, and can achieve the same technical effect. The device provided in the embodiment of the present disclosure can implement all the method steps implemented in the above method embodiments, and can achieve the same technical effect, and the parts and beneficial effects of this embodiment that are the same as those in the method embodiments will not be specifically described here.

Please referring to Fig. 17, an embodiment of the present disclosure also provides a first network function 1700, including a processor 1701, a memory 1702, and a computer program stored in the memory 1702 and executable on the processor 1701. When the computer program is executed by the processor 1701, the various processes of the method embodiment performed by the first network function in the first embodiment are implemented, and the same technical effect can be achieved. To avoid repetition, it will not be repeated here.

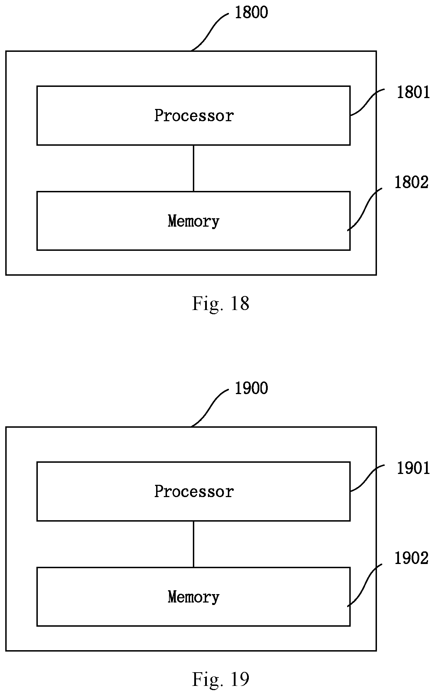

Please referring to Fig. 18, an embodiment of the present disclosure also provides a second network function 1800, including a processor 1801, a memory 1802, and a computer program stored in the memory 1802 and executable on the processor 1801. When the computer program is executed by the processor 1801, the various processes of the method embodiment performed by the second network function in the first embodiment are implemented, and the same technical effect can be achieved. To avoid repetition, it will not be repeated here.

Please referring to Fig. 19, an embodiment of the present disclosure also provides a fourth network function 1900, including a processor 1901, a memory 1902, and a computer program stored in the memory 1902 and executable on the processor 1901. When the computer program is executed by the processor 1901, the various processes of the method embodiment performed by the fourth network function in the first embodiment are implemented, and the same technical effect can be achieved. To avoid repetition, it will not be repeated here.

### Fifth Embodiment

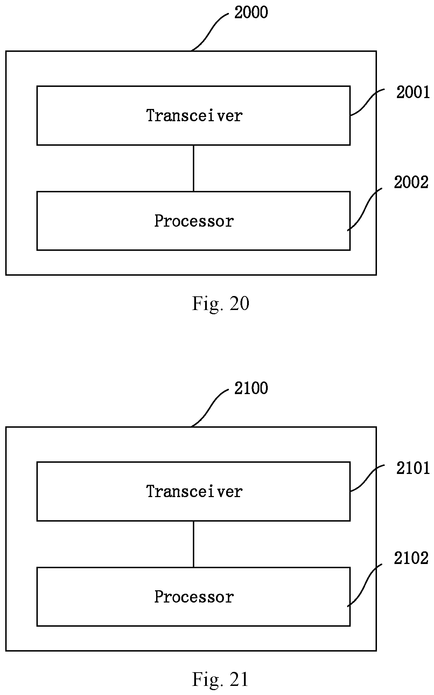

Please referring to Fig. 20, an embodiment of the present disclosure further provides a third network function 2000, including: a transceiver 2001 and a processor 2002.

The processor 2002 is used for sending second information to a fifth network function through the transceiver 2001, wherein the second information includes at least one of: an identifier of the first network function, an identifier of the PDU session served by the first network function, and a subscriber identifier.

The subscriber identifier may specifically be a subscriber identifier associated with the PDU session.

In this embodiment, the third network function sends the second information, thereby providing information such as the identifier of the first network function, the PDU session and the subscriber identifier to the fifth network function. In this way, the fifth network function can maintain the association relationship among each first network function, PDU session and subscriber identifier, and provide the information to the relevant network function when necessary.

Optionally, the processor is also used for sending the second information to the fifth network function through a sixth network function during the establishment of the PDU session.

Optionally, the third network function is an SMF, the fifth network function is a BSF, and the sixth network function is a PCF.

It should be noted that the device in this embodiment is a device corresponding to the method applied to the third network function in the second embodiment, and the implementation methods in the embodiments are all applicable to the embodiments of the device, and can also achieve the same technical effect. The device provided in the embodiment of the present disclosure can implement all the method steps implemented in the above-mentioned method embodiments, and can achieve the same technical effect, and the parts and beneficial effects of this embodiment that are the same as those in the method embodiments will not be specifically repeated here.

Please referring to Fig. 21, an embodiment of the present disclosure further provides a fifth network function 2100, including a transceiver 2101 and a processor 2102.

The processor 2102 is used for receiving second information sent by at least one third network function through the transceiver 2101, wherein the second information includes at least one of: an identifier of a first network function, an identifier of a PDU session served by the first network function, or a subscriber identifier.

The subscriber identifier may specifically be a subscriber identifier associated with the PDU session.

Optionally, the processor is also used for receiving a subscription message sent by a fourth network function for subscribing to information about the first network function, the subscription message carrying an identifier of a target PDU session and a target subscriber identifier; and sending a third notification message to the fourth network function, the third notification message carrying identification information of the target first network function.

Optionally, the target first network function is specifically: a first network function associated with the identifier of the target PDU session and/or the target subscriber identifier.

Optionally, the processor is further used for maintaining an association relationship among each first network function, the PDU session, and the subscriber identifier according to the second information sent by each of the at least one third network function; and
determining, by the fifth network function, according to the association relationship, identification information of the first network function associated with the identifier of the target PDU session and the target subscriber identifier.

Optionally, the processor is further used for sending a fourth notification message to the fourth network function when the target first network function is updated, wherein the fourth notification message carries identification information of the updated target first network function.

Optionally, the fifth network function is a BSF, and the third network function is an SMF.

It should be noted that the device in this embodiment is a device corresponding to the method applied to the fifth network function in the second embodiment, and the implementation methods in the above embodiments are applicable to the embodiments of the device, and can achieve the same technical effect. The device provided in the embodiment of the present disclosure can implement all the method steps implemented in the above method embodiments, and can achieve the same technical effect, and the parts and beneficial effects of this embodiment that are the same as those in the method embodiments will not be specifically described here.

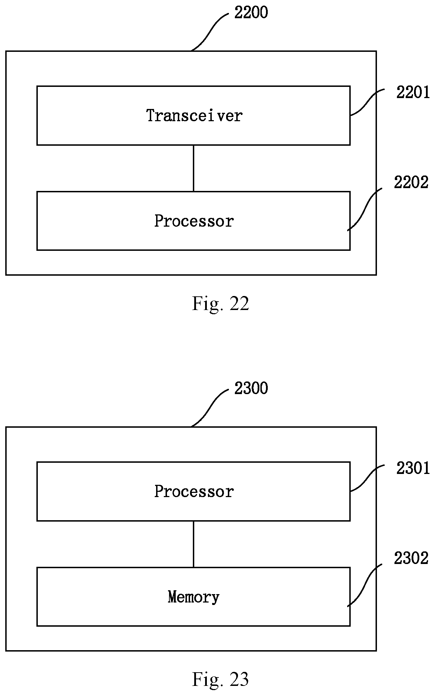

Please referring to Fig. 22, an embodiment of the present disclosure further provides a fourth network function 2200, including a transceiver 2201 and a processor 2202.

The processor 2202 is used for sending a subscription message for subscribing to information about the first network function to the fifth network function through the transceiver 2201, wherein the subscription message carries an identifier of a target PDU session and/or a target subscriber identifier.

Optionally, the processor is further used for receiving a third notification message sent by the fifth network function, wherein the third notification message carries identification information of a target first network function; and subscribing to the target first network function for an information exposure service.

Optionally, the target first network function is specifically: a first network function associated with the identifier of the target PDU session and/or the target subscriber identifier.

Optionally, the processor is further used for receiving a fourth notification message sent by a fifth network function, wherein the fourth notification message carries identification information of an updated target first network function.

Optionally, the fourth network function is an NF, and the fifth network function is a BSF.

It should be noted that the device in this embodiment is a device corresponding to the method applied to the fourth network function in the second embodiment, and the implementation methods in the above embodiments are applicable to the embodiments of the device, and can achieve the same technical effect. The device provided in the embodiment of the present disclosure can implement all the method steps implemented in the above method embodiments, and can achieve the same technical effect, and the parts and beneficial effects of this embodiment that are the same as those in the method embodiments will not be specifically repeated here.

Please referring to Fig. 23, an embodiment of the present disclosure also provides a third network function 2300, including a processor 2301, a memory 2302, and a computer program stored in the memory 2302 and executable on the processor 2301. When the computer program is executed by the processor 2301, the various processes of the method embodiment performed by the first network function in the second embodiment are implemented, and the same technical effect can be achieved. To avoid repetition, it will not be repeated here.

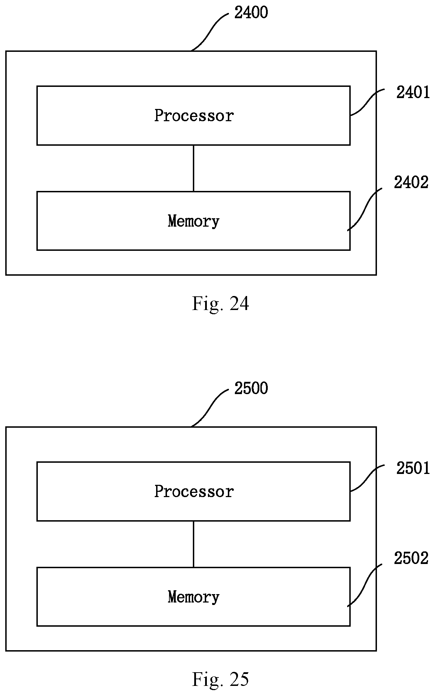

Please referring to Fig. 24, an embodiment of the present disclosure also provides a fifth network function 2400, including a processor 2401, a memory 2402, and a computer program stored in the memory 2402 and executable on the processor 2401. When the computer program is executed by the processor 2401, the various processes of the method embodiment performed by the second network function in the second embodiment are implemented, and the same technical effect can be achieved. To avoid repetition, it will not be repeated here.

Please referring to Fig. 25, an embodiment of the present disclosure also provides a fourth network function 2500, including a processor 2501, a memory 2502, and a computer program stored in the memory 2502 and executable on the processor 2501. When the computer program is executed by the processor 2501, the various processes of the method embodiment performed by the fourth network function in the second embodiment are implemented, and the same technical effect can be achieved. To avoid repetition, it will not be repeated here.

### Sixth Embodiment

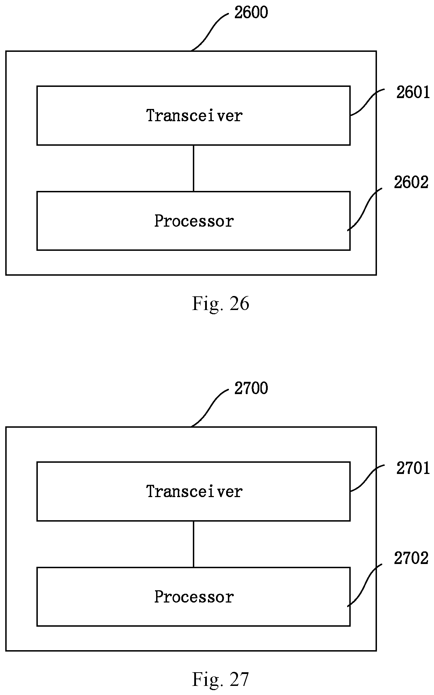

Please referring to Fig. 26, an embodiment of the present disclosure further provides a fourth network function 2600, including a transceiver 2601 and a processor 2602.

The processor 2602 is used for subscribing, through the transceiver 2601, to a source third network function serving the target PDU session for update information of a function related to the target PDU session, wherein the function related to the target PDU session includes a first network function and/or a third network function that serves the target PDU session.

Optionally, the processor is also used for receiving a fifth notification message sent by the source third network function, wherein the fifth notification message is used for indicating update information of the related function serving the target PDU session; and subscribing to the updated first network function for an information exposure service when the fifth notification message indicates the updated first network function.

The fourth network function can subscribe to the third network function for the related information of the first network function or the third network function that serves the target PDU session. In this way, when the first network function serving the target PDU session is updated, the fourth network function can be informed of the update in time and subscribe to the updated first network function for an information exposure service.

Optionally, the processor is also used for sending a first subscription message for subscribing to update information of the function related to the target PDU session to the source third network function serving the target PDU session, wherein the first subscription message carries an identifier of a target subscriber.

Optionally, the processor is further used for sending, to the first network function prior to the update, a first request message for unsubscribing from an information exposure service when the fifth notification message indicates an updated first network function.

Optionally, the processor is also used for determining the updated third network function serving the target PDU session when the fifth notification message indicates that the third network function serving the target PDU session is updated; and sending a second subscription message for subscribing to update information of the function related to the target PDU session to the updated third network function, wherein the second subscription message carries an identifier of a target subscriber.

Optionally, the processor is also used for sending, to the third network function prior to the update, a second request message for unsubscribing from update information of the function related to the target PDU session, when the fifth notification message indicates that the third network function serving the target PDU session changes.

Optionally, the processor is further used for:
sending a third request message for requesting information of the third network function to a seventh network function, wherein the third request message carries at least one of: a target subscriber identifier, S-NSSAI, or DNN; and receiving the information of the third network function found by the seventh network function;
   or,
determining a fifth network function according to an IP address and an identifier of a target subscriber, and then determining a sixth network function, and obtaining the information of the third network function from the sixth network function.

Optionally, the first network function is a UPF, the third network function is an SMF, the fourth network function is an NF, the fifth network function is a BSF, the sixth network function is a PCF, and the seventh network function is a UDM.

It should be noted that the device in this embodiment is a device corresponding to the method applied to the fourth network function in the third embodiment, and the implementation methods in the above-mentioned embodiments are all applicable to the embodiments of the device, and can also achieve the same technical effect. The device provided in the embodiment of the present disclosure can implement all the method steps implemented in the above-mentioned method embodiments, and can achieve the same technical effect, and the parts and beneficial effects of this embodiment that are the same as those in the method embodiments will not be specifically repeated here.

Please referring to Fig. 27, an embodiment of the present disclosure further provides a third network function 2700, including a transceiver 2701 and a processor 2702.

The processor 2702 is used for receiving a subscription message sent by a fourth network function for subscribing to update information of the function related to a target PDU session in a case that the third network function is a source third network function serving the target PDU session, wherein the subscription message carries an identifier of a target user, and the function related to the target PDU session includes a first network function and/or a third network function serving the target PDU session.

Optionally, the processor is further used for sending a fifth notification message to the fourth network function when the function related to the target PDU session is updated, wherein the fifth notification message is used for indicating update information of the related function serving the target PDU session.

Optionally, the processor is further used for, when the first network function serving the target PDU session is updated, sending a fifth notification message indicating the updated first network function to the fourth network function; and/or, when the third network function serving the target PDU session is updated, sending to the fourth network function a fifth notification message indicating that the third network function serving the target PDU session is updated.

Optionally, when the third network function serving the target PDU session is updated, the processor is further used for receiving a second request message sent by the fourth network function for unsubscribing from update information of the function related to the target PDU session, and cancelling the subscription service provided to the fourth network function.

Optionally, the first network function is a UPF, the third network function is an SMF, and the fourth network function is an NF.

It should be noted that the device in this embodiment is a device corresponding to the method applied to the third network function in the third embodiment, and the implementation methods in the above embodiments are applicable to the embodiments of the device, and can achieve the same technical effect. The device provided in the embodiment of the present disclosure can implement all the method steps implemented in the above method embodiments, and can achieve the same technical effect. The parts and beneficial effects of this embodiment that are the same as those in the method embodiments will not be specifically described here.

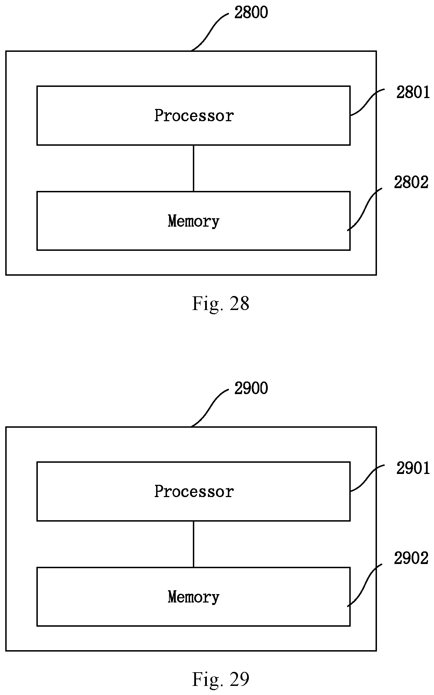

Please referring to Fig. 28, an embodiment of the present disclosure also provides a fourth network function 2800, including a processor 2801, a memory 2802, and a computer program stored in the memory 2802 and executable on the processor 2801. When the computer program is executed by the processor 2801, the various processes of the method embodiments performed by the fourth network function in the third embodiment are implemented, and the same technical effect can be achieved. To avoid repetition, it will not be repeated here.

Please referring to Fig. 29, an embodiment of the present disclosure also provides a third network function 2900, including a processor 2901, a memory 2902, and a computer program stored in the memory 2902 and executable on the processor 2901. When the computer program is executed by the processor 2901, the various processes of the method embodiments performed by the third network function in the third embodiment are implemented, and the same technical effect can be achieved. To avoid repetition, it will not be repeated here.

The embodiment of the present disclosure also provides a computer-readable storage medium on which a computer program is stored. When the computer program is executed by a processor, each process of the embodiments of the above-mentioned information sending method and information subscription method is implemented, and the same technical effect can be achieved. To avoid repetition, it is not repeated here. The computer-readable storage medium is, for example, a read-only memory (ROM), a random access memory (RAM), a magnetic disk, an optical disc, etc.

It should be noted that, in this article, the terms "include", "comprise" or any other variations thereof are intended to cover non-exclusive inclusion, so that a process, method, article or device including a series of elements includes not only those elements, but also other elements not explicitly listed, or also includes elements inherent to such process, method, article or device. In the absence of further restrictions, an element defined by the sentence "includes a..." does not exclude the existence of other identical elements in the process, method, article or device including the element.

Through the description of the above implementations, those skilled in the art can clearly understand that the methods of the above-mentioned embodiments can be implemented by means of software plus a necessary general hardware platform, and of course can be implemented by hardware, but in many cases the former is a better implementation method. Based on such an understanding, essential parts, or parts contributing to the related art, of the technical solution of the present disclosure may be implemented in form of a software product. The software product is stored in a storage medium (e.g., an ROM/RAM, a magnetic disk or an optical disc) and includes several instructions configured to be executed by a terminal (such as a handset, a computer, a server, an air conditioner or a network device) to perform the method according to the embodiments of the present disclosure.

The embodiments of the present disclosure are described above in conjunction with the accompanying drawings, but the present disclosure is not limited to the above-mentioned specific implementations. The above-mentioned specific implementations are merely illustrative and not restrictive. Under the guidance of the present disclosure, ordinary technicians in this field can also make many forms without departing from the purpose of the present disclosure and the scope of the claims, and all of these forms shall be deemed as falling within the scope of the present disclosure.

## Claims

1. An information sending method, comprising:
sending, by a first network function, first information to a second network function, wherein the first information comprises: an identifier of a protocol data unit (PDU) session served by the first network function and/or a subscriber identifier.

2. The method according to claim 1, wherein the sending, by the first network function, the first information to the second network function comprises:
in a process of registering with the second network function by the first network function, sending, by the first network function, the identifier of the PDU session served by the first network function and/or the subscriber identifier to the second network function.

3. The method according to claim 2, further comprising:
sending, by the first network function, a first request message for requesting the first information to a third network function, wherein the first request message carries an identifier of the first network function; and
receiving, by the first network function, the first information sent by the third network function.

4. The method according to claim 3, further comprising:
sending, by the first network function, a subscription request for subscribing to an update of the first information to the third network function, wherein the subscription request carries the identifier of the first network function.

5. The method according to claim 4, further comprising:
receiving, by the first network function, updated first information sent by the third network function, and sending, by the first network function, the updated first information to the second network function.

6. The method according to any one of claims 3 to 5, wherein the first network function is a user plane function (UPF), the second network function is a network repository function (NRF), and the third network function is a session management function (SMF).

7. An information sending method, comprising:
receiving, by a second network function, first information sent by at least one first network function, wherein the first information comprises: an identifier of a PDU session served by the first network function and/or a subscriber identifier.

8. The method according to claim 7, further comprising:
receiving, by the second network function, a subscription message sent by a fourth network function for subscribing to information about the first network function, wherein the subscription message carries an identifier of a target PDU session and/or a target subscriber identifier; and
sending, by the second network function, a first notification message to the fourth network function, wherein the first notification message carries identification information of a target first network function.

9. The method according to claim 8, wherein the target first network function is: a first network function associated with the identifier of the target PDU session and/or the target subscriber identifier.

10. The method according to claim 9, further comprising:
maintaining, by the second network function, an association relationship among each of the at least one first network function, the PDU session, and the subscriber identifier according to the first information sent by each of the at least one first network function; and
determining, by the second network function, according to the association relationship, the identification information of the target first network function associated with the identifier of the target PDU session and/or the target subscriber identifier.

11. The method according to claim 8, further comprising:
in a case that the target first network function is updated, sending, by the second network function, a second notification message to the fourth network function, wherein the second notification message carries identification information of the updated target first network function.

12. The method according to any one of claims 7 to 11, wherein the first network function is a UPF and the second network function is an NRF.

13. An information subscription method, comprising:
sending, by a fourth network function, a subscription message for subscribing to information about a first network function to a second network function, wherein the subscription message carries an identifier of a target PDU session and/or a target subscriber identifier.

14. The method according to claim 13, further comprising:
receiving, by the fourth network function, a first notification message sent by the second network function, wherein the first notification message carries identification information of a target first network function; and
subscribing, by the fourth network function, to the target first network function for an information exposure service.

15. The method according to claim 14, wherein the target first network function is: a first network function associated with the identifier of the target PDU session and/or the target subscriber identifier.

16. The method according to claim 13, further comprising:
receiving, by the fourth network function, a second notification message sent by the second network function, wherein the second notification message carries identification information of an updated first network function.

17. The method according to any one of claims 13 to 16, wherein the fourth network function is a network function (NF), and the second network function is an NRF.

18. An information sending method, comprising:
sending, by a third network function, second information to a fifth network function, wherein the second information comprises at least one of: an identifier of a first network function, an identifier of a PDU session served by the first network function, or a subscriber identifier.

19. The method according to claim 18, wherein the sending, by the third network function, the second information to the fifth network function comprises:
during establishment of the PDU session, sending, by the third network function, the second information to the fifth network function through a sixth network function.

20. The method according to claim 19, wherein the third network function is an SMF, the fifth network function is a binding support function (BSF), and the sixth network function is a policy control function (PCF).

21. An information sending method, comprising:
receiving, by a fifth network function, second information sent by at least one third network function, wherein the second information comprises at least one of: an identifier of a first network function, an identifier of a PDU session served by the first network function, or a subscriber identifier.

22. The method according to claim 21, further comprising:
receiving, by the fifth network function, a subscription message sent by a fourth network function for subscribing to information about the first network function, wherein the subscription message carries an identifier of a target PDU session and/or a target subscriber identifier; and
sending, by the fifth network function, a third notification message to the fourth network function, wherein the third notification message carries identification information of a target first network function.

23. The method according to claim 22, wherein the target first network function is: a first network function associated with the identifier of the target PDU session and/or the target subscriber identifier.

24. The method according to claim 23, further comprising:
maintaining, by the fifth network function, an association relationship among each first network function, the PDU session, and the subscriber identifier according to the second information sent by each of the at least one third network function; and
determining, by the fifth network function, according to the association relationship, identification information of the first network function associated with the identifier of the target PDU session and the target subscriber identifier.

25. The method according to claim 22, further comprising:
in a case that the target first network function is updated, sending, by the fifth network function, a fourth notification message to the fourth network function, wherein the fourth notification message carries identification information of the updated target first network function.

26. The method according to any one of claims 21 to 25, wherein the fifth network function is a BSF, and the third network function is an SMF.

27. An information subscription method, comprising:
sending, by a fourth network function, a subscription message for subscribing to information about a first network function to a fifth network function, wherein the subscription message carries an identifier of a target PDU session and/or a target subscriber identifier.

28. The method according to claim 27, further comprising:
receiving, by the fourth network function, a third notification message sent by the fifth network function, wherein the third notification message carries identification information of a target first network function; and
subscribing, by the fourth network function, to the target first network function for an information exposure service.

29. The method according to claim 28, wherein the target first network function is: a first network function associated with the identifier of the target PDU session and/or the target subscriber identifier.

30. The method according to claim 28, further comprising:
receiving, by the fourth network function, a fourth notification message sent by the fifth network function, wherein the fourth notification message carries identification information of an updated target first network function.

31. The method according to any one of claims 27 to 30, wherein the fourth network function is an NF, and the fifth network function is a BSF.

32. An information subscription method, comprising:
subscribing, by a fourth network function, to a source third network function serving a target PDU session for update information of a function related to the target PDU session, wherein the function related to the target PDU session comprises a first network function and/or a third network function that serves the target PDU session.

33. The method according to claim 32, further comprising:
receiving, by the fourth network function, a fifth notification message sent by the source third network function, wherein the fifth notification message is used for indicating update information of a related function serving the target PDU session;
in a case that the fifth notification message indicates the updated first network function, subscribing, by the fourth network function, to the updated first network function for an information exposure service.

34. The method according to claim 32, wherein the subscribing, by the fourth network function, to the source third network function serving the target PDU session for the update information of the function related to the target PDU session comprises:
sending, by the fourth network function, a first subscription message for subscribing to the update information of the function related to the target PDU session to the source third network function serving the target PDU session, wherein the first subscription message carries an identifier of a target subscriber.

35. The method according to claim 33, wherein in a case that the fifth notification message indicates the updated first network function, the method further comprises:
sending, by the fourth network function, to a first network function prior to the update, a first request message for unsubscribing from an information exposure service.

36. The method according to claim 33, wherein in a case that the fifth notification message indicates that a third network function serving the target PDU session is updated, the method further comprises:
determining, by the fourth network function, an updated third network function that serves the target PDU session; and
sending, by the fourth network function, to the updated third network function, a second subscription message for subscribing to the update information of the function related to the target PDU session, wherein the second subscription message carries an identifier of a target subscriber.

37. The method according to claim 33, wherein in a case that the fifth notification message indicates that a third network function serving the target PDU session is changed, the method further comprises:
sending, by the fourth network function, to a third network function prior to the update, a second request message for unsubscribing from update information of the function related to the target PDU session.

38. The method according to claim 36, wherein the determining, by the fourth network function, the updated third network function that serves the target PDU session comprises:
sending, by the fourth network function, a third request message for requesting information of the third network function to a seventh network function, wherein the third request message carries at least one of: a target subscriber identifier, single network slice selection assistance information (S-NSSAI), or a data network name (DNN); and receiving, by the fourth network function, the information of the third network function found by the seventh network function;
or,
determining, by the fourth network function, a fifth network function according to an Internet protocol (IP) address and/or an identifier of a target subscriber, and then determining, by the fourth network function, a sixth network function, and obtaining, by the fourth network function, the information of the third network function from the sixth network function.

39. The method according to claim 38, wherein the first network function is a UPF, the third network function is an SMF, the fourth network function is an NF, the fifth network function is a BSF, the sixth network function is a PCF, and the seventh network function is a unified data management (UDM).

40. An information sending method, comprising:
receiving, by a source third network function serving a target PDU session, a subscription message sent by a fourth network function for subscribing to update information of a function related to the target PDU session, wherein the subscription message carries an identifier of a target subscriber, and the function related to the target PDU session comprises a first network function and/or a third network function serving the target PDU session.

41. The method according to claim 40, further comprising:
in a case that the function related to the target PDU session is updated, sending, by the source third network function, a fifth notification message to the fourth network function, wherein the fifth notification message is used for indicating update information of a related function serving the target PDU session.

42. The method according to claim 40, wherein the sending, by the source third network function, the fifth notification message to the fourth network function comprises:
in a case that the first network function serving the target PDU session is updated, sending, to the fourth network function, the fifth notification message indicating the updated first network function;
and/or,
in a case that the third network function serving the target PDU session is updated, sending, to the fourth network function, the fifth notification message indicating that the third network function serving the target PDU session is updated.

43. The method according to claim 40, wherein in a case that a third network function serving the target PDU session is updated, the method further comprises:
receiving, by the source third network function, a second request message sent by the fourth network function for unsubscribing from the update information of the function related to the target PDU session, and cancelling, by the source third network function, the subscription service provided to the fourth network function.

44. The method according to claim 40, wherein the first network function is a UPF, the third network function is an SMF, and the fourth network function is an NF.

45. A first network function, comprising a transceiver and a processor, wherein,
the processor is used for sending first information to a second network function through the transceiver, wherein the first information comprises: an identifier of a PDU session served by the first network function and/or a subscriber identifier.

46. A second network function, comprising a transceiver and a processor, wherein,
the processor is used for receiving, through the transceiver, first information sent by at least one first network function, wherein the first information comprises: an identifier of a PDU session served by the first network function and/or a subscriber identifier.

47. A fourth network function, comprising a transceiver and a processor, wherein,
the processor is used for sending, through the transceiver, a subscription message for subscribing to information about a first network function to a second network function, wherein the subscription message carries an identifier of a target PDU session and a target subscriber identifier.

48. A third network function, comprising a transceiver and a processor, wherein,
the processor is used for sending, through the transceiver, second information to a fifth network function, wherein the second information comprises at least one of: an identifier of a first network function, an identifier of a PDU session served by the first network function, or a subscriber identifier.

49. A fifth network function, comprising a transceiver and a processor, wherein,
the processor is used for receiving, through the transceiver, second information sent by at least one third network function, wherein the second information comprises at least one of: an identifier of a first network function, an identifier of a PDU session served by the first network function, or a subscriber identifier.

50. A fourth network function, comprising a transceiver and a processor, wherein,
the processor is used for sending, through the transceiver, a subscription message for subscribing to information about a first network function to a fifth network function, wherein the subscription message carries an identifier of a target PDU session and/or a target subscriber identifier.

51. A fourth network function, comprising a transceiver and a processor, wherein,
the processor is used for subscribing, through the transceiver, to a source third network function serving a target PDU session for update information of a function related to the target PDU session, wherein the function related to the target PDU session comprises a first network function and/or a third network function that serves the target PDU session.

52. A third network function, comprising a transceiver and a processor, wherein,
the processor is used for receiving, through the transceiver, a subscription message sent by a fourth network function for subscribing to update information of a function related to a target PDU session in a case that the third network function is a source third network function serving the target PDU session, wherein the subscription message carries an identifier of a target subscriber, and the function related to the target PDU session comprises a first network function and/or a third network function serving the target PDU session.

53. A network function, comprising: a processor, a memory, and a program stored in the memory and executable on the processor, wherein the program, when executed by the processor, implements the steps of the method according to any one of claims 1 to 44.

54. A computer-readable storage medium having a computer program stored thereon, wherein the computer program, when executed by a processor, implements the steps of the method according to any one of claims 1 to 44.
